# EUROPEAN PATENT APPLICATION

(11) **EP 2 720 096 A2**
(43) Date of publication of application: **16.04.2014**
(21) Application number: 13465501.8
(22) Date of filing: 04.02.2013
(51) Int. Cl.: G05B 19/042

(54) **Intelligent automation system based on a distributed, reconfigurable and adaptive architecture**

(30) Priority: 13.10.2012 RO 201210029
(71) Applicant: Universitatea Tehnica din Cluj-Napoca, 400114 Cluj-Napoca (RO)
(72) Inventor: Brad, Stelian, 400445 Cluj-Napoca (RO)

(57) **Abstract**

Summary

The invention represents an enhanced automation system used to control, command, monitor and configure the functionality of intelligent equipments and of the served process, designed to fulfill the requirements of small to medium enterprises. It is characterized by a rapid reconfigurable, adaptive and dynamic architecture which is capable to respond, using its resources, to any process or change in order to quickly and efficiently react to met the requirements. Equipments are endowed with a minimum level of distributed intelligence and communication options.

The architecture consists of a main control unit (1), high priority output intelligent equipments (2), high priority input intelligent equipments (3), low priority output intelligent equipments (4) and low priority input equipment (5). The adapters (6) and (7) are specific to high priority output and input intelligent equipments and adapter (8) for low priority intelligent equipments. The main control unit drives the automation process accordingly to the served process. When an intelligent equipment is connected to the communication network it configures its intern modules, waits a general call from the main control unit and answers to it. Afterward it waits to be auto integrated in the process and configured by the operator through human-machine interface and programmed by the main control unit with the desired functionality and selected configuration options, with respect to implemented options, functionalities and hardware constraints.

## Description

The invention represents an enhanced automation system used to control, command, monitor and configure the functionality of intelligent equipments and of the served process, designed to fulfill the requirements of small to medium enterprises. It is characterized by a rapid reconfigurable, adaptive and dynamic architecture where equipments are endowed with a minimum level of distributed intelligence and communication options.

A similar automation solution developed by Rockwell Automation is available on the market. Mainly, this Rockwell Automation architecture is built around an RSLogix series controller and it is based on field equipments which possess a level of built-in intelligence. All major automation equipments are connected through a communication protocol to the controller. The built-in intelligence of such equipments contain specific equipments characteristics, technical information and control options for obtaining a superior control level for the served process.

Even if, it is an advanced automation solution with respect to processes needs, it has some major drawbacks: controller's reduced level of configurability, major financial implications regarding the initial investment and the maintenance services. Moreover, continuous training is required for operators and system integrators. Somehow, in order to achieve a trouble free and an easy to debug automation system with the desired level of efficiency and control, equipments under the same corporate brand need to be used. More likely, this solution is feasible for big corporation, being financially inaccessible and technically unjustified for small to medium enterprises (SMEs). Thus, special attention and support should be provided to SMEs since they represent ∼10% from all the companies and they produce ∼22% from the European Union GDP.

Considering the above mentioned, the most common choice of small to medium enterprises among available automation solutions, is represented by traditional ones. Traditional automation systems have standard controllers characterized by a reduced level of performances with respect to their costs and controller's major components capabilities. Even more, re-configurability is not properly developed and exploited, distributed intelligence is available only to few field equipments and the quality of human-machine interfaces and development software is low. These characteristics generate increased development costs together with programming efforts, with respect to SMEs resources. Their disadvantages are reflected into significant dead times, increased ramp-up time, rugged debugging and programming methods together with a reduced overall level of reconfiguration and slightly above average efficiency considering the served process.

This invention overcomes the disadvantages of the actual automation systems by employing a highly reconfigurable, adaptive and distributed architecture concept for achieving a superior control of served processes. An automation system built on such architecture is endowed with a high degree of re-configurability and the capacity to adapt to, and to integrate a large number and variety of equipments, regardless the producer. Moreover, better usage of hardware resources, endowing equipments with a minimum level of distributed intelligence and employing advanced information management methods will result in a more efficient process control. From the financial point of view this architecture requires reduced costs for investments, maintenance services and personnel training.

This invention presents a reconfigurable, adaptive and distributed architecture for intelligent automation systems, which is capable to respond, using its resources, to any process or change in order to quickly and efficiently react to meet its requirements. This is possible since a symbiosis, is achieved, between the logic of the main control unit and the logic and distributed intelligence part of the intelligent equipments, which are part of the automation process. Regarding intelligent equipments, a second symbiosis, is realized, between the logic and distributed intelligence part and the equipment itself which contains all the physical circuitry that are required for equipment control. Considering these, the invention provides a solid base framework for automation systems.

An intelligent automation system, as presented, contains the main control unit, intelligent equipments, high and low input or output adaptors, low priority adaptors and a human-machine interface, which are connected through a communication protocol for data exchange.

The **main control unit** is an embedded system built around a high performance microcontroller. The embedded system hardware and software have been designed to achieve a superior control level of the served process, to real-time re-configure its resources and performances as required by the process and to adjust the functionality of all the process components. Its framework allows an increased number and variety of intelligent equipments to be connected and auto integrated. The main connection and data exchange method between the main control unit and intelligent equipments is through a communication protocol. High priority intelligent equipments have an additional direct connection to one of the main control unit pins. The main control unit pins directions are not predefined as in traditional controllers, only after a high priority intelligent equipment is connected and auto integrated, the corresponding pin direction is defined. This direct connection between the main control unit and high priority intelligent equipment it is used to quickly trigger specific software procedures and hardware actions as a response to process changes. Specific software procedures and corresponding hardware actions are triggered on main control unit side, in case of input intelligent equipments, or on intelligent equipments side in case of output intelligent equipments. Pins direction are real-time defined base on what type of intelligent equipments are connected. Equipments can be added or removed any time achieving an increased level of flexibility, adaption and re-configurability.
The usual scan cycle of traditional controllers is replaced with a real-time operating system which works on tasks and interrupts and is controlled by the priorities with which they were assigned, realizing a faster, more stable and smoother control of the served process.

The **intelligent equipment** is a combination made of the equipment itself and an embedded system built around a microcontroller. The embedded system hardware and software has been designed to allow a wide range of actions to be performed on its framework for achieving the desired level of functionality required by the served process. There are two types of intelligent equipments: input and output, and they can have high or low priority with respect to the type of connected adapter.

The embedded system of an intelligent equipment has two parts regardless its type. The first, logic and distributed intelligence part, is common for both types and contains the electronic circuitry, software algorithms and information required for the control of the second part and for specific processes of the main control unit.

The second part of an intelligent equipment is specific to its type. Considering output intelligent equipments, the second part contains all the output signals and power circuitry required to command an output equipment. Regarding input intelligent equipments, the second part includes all the circuitry required to acquire digital or analog signals from input equipments.

With respect to the type of adapter used, either high or low priority is assigned to an intelligent equipment. Low priority intelligent equipments are connected with the main control unit only through the communication protocol. Therefore, the number of low priority intelligent equipments that can be connected is theoretically unlimited, but constrained by the technical characteristics of the chosen communication protocol and temporary aspects of the served process. High priority intelligent equipments are connected to the main control unit through the communication protocol and by an additional direct connection. The number of high priority intelligent equipments that can be connected to the main control unit is directly related to the number of available pins that can support a connection with the external world. In normal operating mode, this direct connection is used to quickly trigger specific software procedures and hardware actions on the main control unit side by the intelligent input equipments or on the intelligent output equipments side by the main control unit according to how the process and intelligent equipments were configured to operate. Specific software procedures and hardware actions can also be triggered by low priority intelligent equipments on main control unit side or by the main control unit on low priority intelligent equipments side using the communication protocol, but the response will not be as quick as for high priority intelligent equipments.

Intelligent equipments are programmed using the communication protocol with the source code generated by the human-machine interface automatic code generator according with operator's configuration options with respect to the available implemented functionalities.

By these means a high degree of scalability and re-configurability is achieved. The number and complexity of functionalities that can be implemented inside an intelligent equipment logic and distributed intelligence part is related to software creativity and hardware constraints of the embedded designed and equipment performances.

An input intelligent equipment acquires, process and manages analog or digital signals from the sensor or the transducer itself. The signal is acquired using the hardware circuitry of the input intelligent equipment, processed and managed by the activated software algorithms which are available on the distributed intelligence part as chosen by the operator when the intelligent equipment was configured. Analog signals are processed in close proximity of the physical parameter they measure obtaining a better accuracy by eliminating signal losses and electric noise.

After the analog and digital signals are processed and managed, the information is digitally sent through the communication protocol to the main control unit or to other intelligent equipments to which it was assigned, when required. If it has a high priority, the intelligent equipment has the ability, based on internal information management, to quickly trigger specific procedures and actions on main control unit side through the direct connection.

An output intelligent equipment controls and commands the power circuitry of the assigned equipment and/or generates output signals with specific electric parameters as configured by the operator in the configuration process. The control algorithm is created or selected, if available, by the operator through the human-machine interface. Several control algorithms can be stored inside the logic and distributed intelligence part of the output intelligent equipment. Main control unit is able to send control information, to start specific control procedures and hardware actions using the communication protocol. If the intelligent output equipments has a high priority, main control unit has the ability, to quickly trigger specific procedures and actions on intelligent equipment side through the direct connection.

By the concept of this invention, usual automation equipments performances, abilities and control options are enhanced by employing embedded systems, software algorithms and hardware designs. Considering the above mentioned, benefits like: independent decision taking, efficient process control, increased accuracy, shorter control loops and reaction time, plug and play, overcoming execution mistakes, preventive maintenance and product life cycle can be obtain and implemented inside each intelligent equipment logic and distributed intelligence part. Moreover, considering, architecture characteristics and by efficient task distribution to equipments, the computational effort on the main control unit side can be reduced to a minimum, for achieving an increased overall performance of the automation process.

The concept behind the **human-machine interface** is built on a software application and user-friendly graphical interface. The human-machine interface provides the operator with all the resources required to develop the control algorithm for the served process and to configure the functionality and operation of the connected intelligent equipments. Resources used by the human-machine interface are related to the main control unit and intelligent equipments performances, constraints, implemented functionalities and configuration options.

An automatic source code generator stands for the human-machine interface and its functionality is based on the virtual models of microcontrollers used in the embedded system of the intelligent equipments and on the available information, implemented functionalities and configuration options. All implemented functionalities and configuration options are stored inside the logic and distributed intelligence part of intelligent equipments.

When the configuration process ends, the generated source code is programmed via the communication protocol to a memory zone inside the logic and distributed intelligence part of the corresponding intelligent equipment in order to act according to the operator's selections.

The above presented concept of the human-machine interface together with the automatic source code generator and the available information inside the logic and distributed intelligence part of each intelligent equipment turns the programming process, by auto integration, interrogation and identification of the connected intelligent equipments, into a simple process that does not require highly trained personnel for process and intelligent equipment configuration.

A **communication protocol** is the background for information exchange between the main control unit, intelligent equipments and the human-machine interface. The main control unit uses the communication protocol to gather, receive or send information to and from all the connected intelligent equipments. The communication protocol represents an important component of this architecture since important processes like equipment configuration, information exchange and equipment control are using it. Therefore, a communication protocol has the ability to software address connected intelligent equipments, to hot swap and plug intelligent equipments, to support a high number of intelligent equipments, to use a reduced number of wires, to work at high communication speeds and also being stable is a must.

**Input** and **output adaptors** are additional hardware parts and they are of three types: high priority input adaptor, high priority output adaptor and low priority input or output adaptors. These adaptors are used: to supply with power the circuitry of logic and distributed intelligence part of intelligent equipments, to assign a priority to the intelligent equipment to which it was connected, to connect the communication lines of the communication protocol with the intelligent equipments and to isolate electric capacitance between them, to modify the voltage level in order to match the logic of the equipments and main control unit. For high priority intelligent equipments they help main control unit to identify their type, input or output, and act as an optical isolator and voltage level shifter for the input or output signals.

An implementation for this invention is given bellow in connection with figures 1, 2 and 3:
- Figure 1 - represents the concept of the proposed control architecture for automation systems.
- Figure 2 - represents the operating principle diagram of the main control unit.
- Figure 3 - represents the operating principle diagram of intelligent equipments.

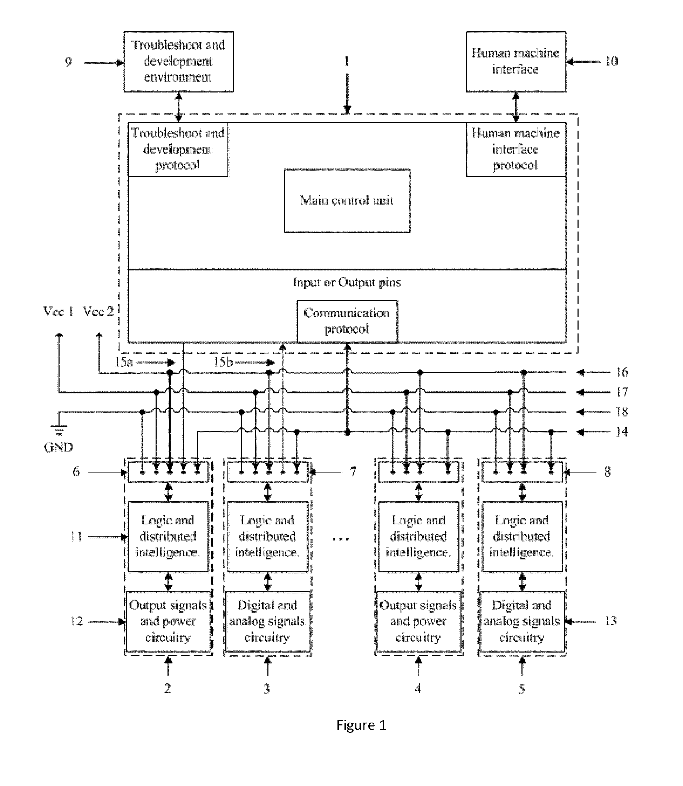

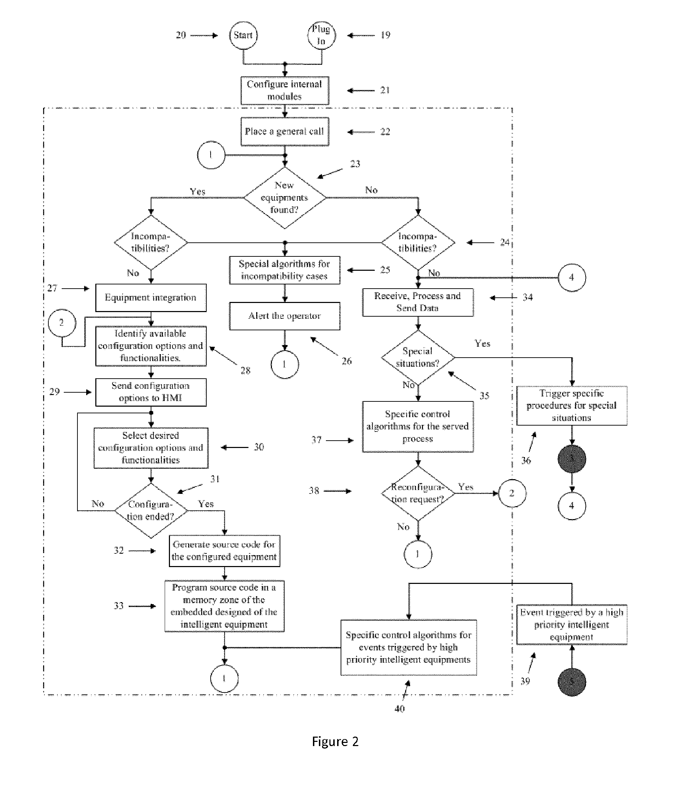

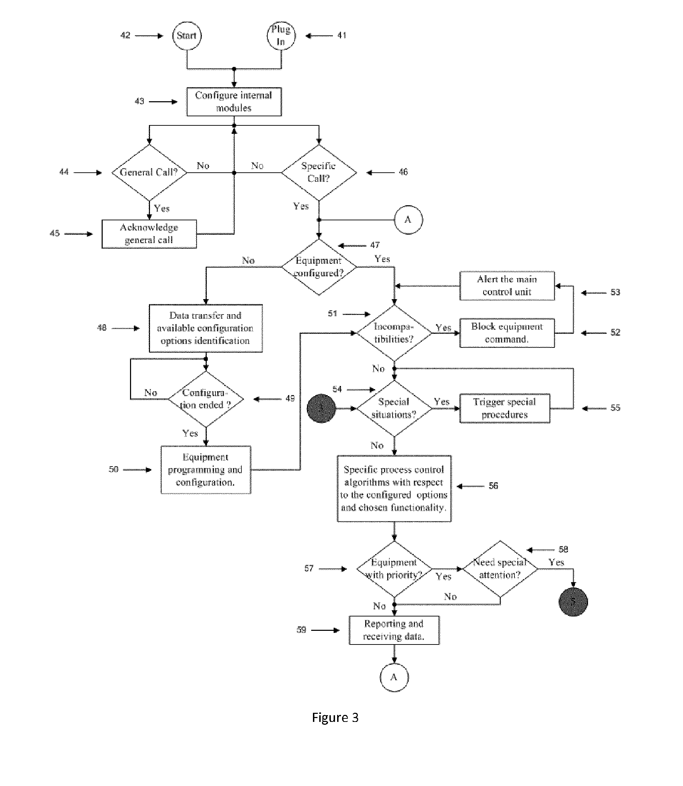

The proposed control architecture (figure 1) and the operating diagrams of the main control unit (figure 2) and intelligent equipments (figure 3) are related to components of the proposed automation system architecture: the main control unit 1, high priority output equipment 2, high priority input equipment 3, low priority output equipment 4, low priority input equipment 5, together with the input adapter 6 and output adapter 7 for high priority input and output equipments. Low priority equipments 4 and 5 are connected to the main control unit 1, through adapters 8. Troubleshooting and development actions for the automation system are done using a specific interface 9 and the interface between the operator and the automation system is realized by using a human-machine interface 10, through the main control unit 1.

All intelligent equipments 2, 3, 4 and 5, regardless their priority, have a logic and distributed intelligence part 11, that contains information about the equipment itself, specific equipment and process control algorithms and configuration options related to the desired equipment functionalities which are built-in by software means. Output intelligent equipments 2 and 4, are characterized by having a part of output signals and power circuitry 12, designed for effectively control equipments (e.g. pups, blowers, etc) and/or for generating output signals having specific electric parameters. Input intelligent equipments 3 and 5, are characterized by having a part of digital and analog signals circuitry 13, designed to gather information from input equipments (e.g. sensors or transducers).

The main control unit 1, uses the communication protocol 14, to physically connect and exchange data with high priority intelligent equipments 2, 3, and low priority intelligent equipments 4 and 5. Main control unit 1, has the following roles:
- to identify newly connected intelligent equipments and to establish a connection with the embedded system of the concerned intelligent equipment. To obtain the required information stored inside the logic and distributed intelligence part 11 of the intelligent equipment (operating parameters, control algorithms, available configuration options and functionalities, etc).
- to real-time configure the direction of the connection to external world, to output 15a or input 15b, to which a high priority intelligent equipment was connected in order to match the type of intelligent equipment.
- to check the available information of the newly connected intelligent equipments and compare it with already connected intelligent equipments in order to identify incompatibilities, prevent execution mistakes and deterioration of the output equipments by ignoring command attempts of the output signals and power circuitry 12, of the concerned intelligent output equipments.
- to show the status and condition of the connected intelligent equipments.
- to reveal the available information, configuration options, functionalities and to provide the support required to build a control algorithm to the operator through the human-machine interface 10.
- to program the specific memory zone of the logic and distributed intelligence part 11, of the connected intelligent equipments with respect to the options chosen by the operator during the configuration process or on request.
- to exchange information and process data with intelligent equipments and to trigger, specific software procedures and hardware actions related to main control unit or intelligent equipments requirements, through the communication protocol 14, or through direct connections 15a and 15b, on the main control unit or on the intelligent equipment side.

Intelligent equipments as described, are made out of a common part named logic and distributed intelligence (11), and on the one hand a specific part for output intelligent equipments 2 and 4 named output signals and power circuitry (12), and on the other hand a specific part for input intelligent equipments 3 and 5 named digital and analog signals circuitry (13).

Logic and distributed intelligence part includes:
- all the available information about the equipment to which the embedded system was assigned to form an intelligent equipment required for the configuration process ( technical characteristics, operating parameters, control algorithms, implemented functionalities, etc).
- all the software algorithms and physical circuitry required to power up and assure proper functionality of the logic and distributed intelligence part (11). This is required for the command and control of the output signals and power circuitry (12) part of intelligent output equipments or to control, monitor, process and manage gathered data from digital and analog signals circuitry (13) part of intelligent input equipments.

All the information that is required to be inside the logic and distributed intelligence part (11) with respect to the expected functionalities of the intelligent equipment could be implemented by the equipment producers, third party companies or experienced operators.

The output signals and power circuitry (12) is the hardware used by the logic and distributed intelligence part (11) to supply and control an output equipment in order to make it work as required by the operator. The digital and analog signals circuitry (13) represents the required circuitry for delivering the analog or digital signal to the logic and distributed intelligence part in order to be processed and managed according to process and operator needs.

Intelligent equipments have the following role:
- to configure their functionality and act as selected by the operator with respect to the available implemented configuration options, functionalities and constraints.
- to respond and act according to the control algorithm and obtain the required functionality as expressed by the operator through the equipment and process configuration.
- to alert the main control unit about unusual events and take individual decisions in order to avoid damaging output equipments, by ignoring the commands of the concerned output equipment.
- to keep a database with important information about equipment functionality ( e.g. operating hours, operating environment, maintenance due dates, electric parameters).
- to identify unusual equipment behavior based on data record and report to the main control unit.

**Equipment adapters** 6, 7 and 8 are additional hardware parts and have the following role:
- to assign a priority to the intelligent equipment to which it was connected.
- to supply with power the logic and distributed intelligence part 11 of intelligent equipments 2, 3, 4 and 5 from the power lines 16, 17 and 18.
- to connect intelligent equipments to the communication network together with ensuring the technical requirements needed by the communication protocol to provide the desired level of functionality and performances.

Considering high priority equipments the adapters have:
- to provide optical isolation for the electric signal between main control unit and high priority intelligent equipments.
- to modify the voltage level for the output 15a and input 15b signals in order to match the logic voltages for the intelligent equipments and the main control unit.
- to help main control unit identify connected intelligent equipments.
- to help the integration processes of the newly connected intelligent equipments and the configuration of the main control unit pins direction to which intelligent equipments were connected.
- to quick trigger specific implemented software procedures and hardware actions on the main control unit or intelligent equipments side, using direct connections 15a or 15b.

The **human-machine interface** 10, connects the operator with the automation system and allows the operator to configure, command and monitor intelligent equipments. The human- machine interface concept uses an advance, easy to use graphic application as an interface between the operator and the automation system for transposing the technological requirements of the served process into a control algorithm. A code generator is responsible for building the source code out of the designed process control algorithm and selected configuration options of intelligent equipments. Then, a specific memory zone of microcontrollers which are part of the main control unit and intelligent equipments embedded systems is programmed. The human-machine interface role is:
- to established a connection with continuous data exchange between the intelligent equipments of the served process and the operator.
- to notify the operator about main control unit or intelligent equipments independent decisions and actions.
- to be used as a development environment for the control algorithm of the served process and configuration environment for intelligent equipments.
- to generate the required source code for the automation system control and for the intelligent equipments.

The **troubleshoot and development interface** 9, is used by architecture developers to debug issues and monitor specific parameters. This interface was not designed to be used by the operator.

The connection between the logic and distributed intelligence part 11 of intelligent equipments 2, 3, 4 and 5 and the main control unit 1 is done using the adapters 6, 7 and 8. Output adapter 6, allows the signal to pass from the main control unit to high priority output intelligent equipment 2 through the physical connection 15a. The output signal is used to quickly trigger specific procedures and hardware actions on output intelligent equipment side. Input adapter 7, allows the signal to pass from the high priority input intelligent equipment 3 to main control unit through the physical connection 15b; this signal is used to quickly trigger specific software procedures and hardware actions on the main control unit side. Adapter 8, is used by low priority input or output intelligent equipments, 4 and 5, and it is not provided with hardware support for physical connections like 15a or 15b. The communication protocol 14 is the only way to control, monitor or exchange information between low priority intelligent equipments and main control unit. It is considered that low priority intelligent equipments, 4 and 5, does not have a crucial role in the process.

According to figure 2 which presents the concept diagram of the operating principle of main control unit 1, after connecting to a power supply 19, or under the start action 20 of the operator, the following phases are:
- main control unit 1 configuration phase.
- intelligent equipment configuration phase.
- main control unit 1 operation and control phase.

Furthermore, a functional or a test block as in figures 2 and 3, will represent all the software and hardware circuitry required to achieve what the block briefly describes. Blocks which involves operations that requires information exchange between the main control unit and intelligent equipments are using the communication protocol as the main framework.

During the first phase, main control unit 1, runs a set of predefined procedures and actions. Functional **block 21,** configures by software means the main control unit internal modules required to achieve the overall basic hardware functionality of the main control unit to operate properly.

Then the operation and control phase starts through functional **block 22** which places a general call on the communication protocol 14 and listens for a response in order to identify if new intelligent equipments have been connected to the communication network.

Based on the result of block 22, the test **block 23,** checks if a new intelligent equipment was connected and drives the process to the corresponding branch (Yes branch or No branch).

Regardless block 23 result, the test **block 24,** runs a compatibility check between existing intelligent equipments and the newly connected one, if any, and drives the process to the corresponding branch according to the result of the test.

If an incompatibility has been identified, the process is directed towards functional **block 25,** through the corresponding branch of block 24. Specific algorithms are run by block 25 for managing incompatibilities cases. Afterwards, the process is directed to functional **block 26,** which informs the operator about the identified situations. All the available information and solving options for the identified issue, as found by block 25, are presented to the operator through the human-machine interface 14. Afterwards, the process starts over from block 23. Until the operator will not take a decision or action regarding this incompatibility, the main control unit will avoid or ignore the control of concerned intelligent equipment and related intelligent equipments.

If block 23, identified that new intelligent equipments are connected and there is not an incompatibility denoted by block 24 then the process is directed to functional block 27. Through this block starts the intelligent equipment configuration phase. Block 27 goal is to connect to the logic and distributed intelligence part of the newly intelligent equipment, to identify and to auto integrate it.

After the equipment is identified and integrated, the process is directed to functional **block 28,** that is used, to find out intelligent equipment available functionalities and configuration options. All these options are implemented in a memory zone of the logic and distributed intelligence part of the connected intelligent equipment.

Then, the process reaches functional **block 29,** that sends the identified functionalities and configuration options of the newly connected intelligent equipment to the human-machine interface.

Through functional **block 30,** the main control unit identifies what options have been chosen by the operator, with respect to available functionalities and configuration options. Using the test **block 31,** main control unit periodically checks if the configuration process ends. If the configuration process ended, the process is directed towards to the corresponding branch to block 32, otherwise the process goes back to block 30.

The source code is automatically generated by the human-machine interface under functional **block 32** according to the intelligent equipment configuration process. Afterwards **block 33** is used to program a specific memory zone of the logic and distributed intelligence part with the generated source code, so that the newly connected intelligent equipment to act as specified by the operator in the configuration process. After the newly intelligent equipment is programmed, the intelligent equipment configuration phase ends.

If test block 23, did not identified any new intelligent equipments connected and there is not an incompatibility denoted by block 24 then the process is directed to functional **block 34.** Block 34 goal is to manage and process data that have been received from the connected intelligent equipments or that have to be sent to the connected intelligent equipments.

Test **block 35,** checks the processed data, from block 34, in order to identify intelligent equipments that requires special attention. If an intelligent equipment requires special attention, the process is directed towards functional **block 36,** through the corresponding branch of block 35. Specific software routines and hardware actions are triggered by **block 36** for concerned intelligent equipments through the communication protocol and through the direct connection, in case of high priority output intelligent equipments. Block 36 effects are reflected on intelligent equipment operating principle diagram and their functionality, figure 3. Then data is reported back to the main control unit and the process is driven back to block 34.

If test block 35, based on data processed by block 34, does not identify any equipment that requires special attention, the process is directed to functional **block 37.**

Block 37 contains specific control algorithms required to drive the served process as specified by the operator.

Test **block 38,** checks if a request for intelligent equipment configuration or re-configuration has been placed by the operator. In case of such a request, the process goes to block 28 and the specific equipment configuration phase starts again for the concerned intelligent equipment. If there is not any request the process starts over from block 23.

Functional **block 39** listens and identifies signals triggered by high priority input intelligent equipment, based on their operating principle as presented in figure 3. Then, if such a signal is identified, functional **block 40** starts specific software procedures and hardware actions in order to quickly solve the issues generated by high priority input intelligent equipments. If a signal from a high priority input equipment is sent, the process immediately jumps to block 39 regardless the block that was being processed. After block 40 solves the high priority input intelligent equipment request, then the process goes back to the block that was ongoing when the high priority signal was received or the process start over from block 23.

According to figure 3 which presents the concept diagram of the operating principle of intelligent equipments 2, 3, 4 and 5, after connecting to a power supply 41, or under the start action 42 of the operator, the following phases are:
- intelligent equipments 2,3,4 and 5 internal modules configuration phase.
- intelligent equipment 2,3,4 and 5 configuration phase.
- intelligent equipment 2,3,4 and 5 operation and control phase.

During the first phase, intelligent equipments 2, 3, 4 and 5, are running a set of predefined procedures and actions. Functional **block 43,** configures by software means the internal modules of the intelligent equipments 2, 3, 4 and 5 in order to achieve the basic functionality required to operate properly.

Then the intelligent equipment listens for a general call or a specific call. If the intelligent equipment is newly connected, the process is directed towards testing **block 44.** In this block the intelligent equipment continuously listens the communication protocol for a general call. Then the process is directed to the corresponding branch. If a general call has been received the process is directed to functional **block 45,** where an acknowledgment, for receiving the general call, is placed back on the communication protocol. By this way the main control unit knows that new intelligent equipments have been connected.

Afterwards or if the equipment it is not new the process is directed towards test **block 46.** The intelligent equipment continuously listens the communication protocol until is called by the main control unit.
If the specific call was received by the intelligent equipment the process is directed to test **block 47** which checks if the equipment is configured or not and the process is driven to the corresponding process branch.

If the intelligent equipment is not configured, the configuration phase of the intelligent equipment options and functionalities start with functional **block 48.** This block, responds to the main control unit requirements and delivers all the available information about the intelligent equipment together with implemented configuration options and functionalities for the configuration process. The operator select how the intelligent equipment to work, with respect to the implemented configuration options and available functionalities, through the human-machine interface 10.

The intelligent equipment, periodically checks the test **block 49** to identify when the operator finishes the configuration process of the newly connected intelligent equipment. If the configuration process of the intelligent equipment ends the process is directed towards functional **block 50,** otherwise the process is directed back to block 49 to check again.

**Block 50** represents the programming process of the source code generated by the human-machine interface according to the operator's selections into a specific memory zone of the logic and distributed intelligence part of the intelligent equipment. After the intelligent equipment is programmed the second phase of the main control unit ends.

If the equipment is configured, the operation and control phase stars. Test **block 51** runs a compatibility check between other existing intelligent equipments to which this intelligent equipment was assigned or to which other intelligent equipments were assigned, if it is the case.
If an incompatibility has been identified by test block 51, the process is directed to functional **block 52,** through the corresponding branch of block 51. Block 52 ignores all control actions of the concerned intelligent equipment.

Then, the intelligent equipment lets the main control unit know about this particular situation through functional **bloc 53** and the process goes back to block 51 to check if the incompatibility is still present. While an incompatibility is detected, the main control unit or the operator is not allowed to control, remote control or perform any action related to this intelligent equipment.

If there is no incompatibility or the existing ones have been fixed, the process is directed to testing **block 54,** which checks if a special situation or procedure has been triggered by the main control unit through the direct connection or through the communication protocol.

If a special situation is identified the process is directed towards functional **block 55** which triggers specific handling software procedures and hardware actions according to the requirements of the identified special situation. Then, the process goes back to testing block 54.

If no special situation is detected the process moves to functional **block 56.** This block contains all the algorithms used by the intelligent equipment in order to respond to the requirements of the main control unit or of the served process, as configured by the operator.

If a signal from the main control unit 1 is sent to a high priority output equipment through the direct connection 15a the process immediately jumps to block 54 regardless the block that was being processed, block 55 solves the main control unit 1 requests, then process goes back to the block that was ongoing when the high priority signal was received.

Test **block 57,** checks if this is a high priority input intelligent equipment. If it is the case the process is directed to test **block 58,** which checks if the concerned equipment requires special attention, based on information processed by block 56. If special attention is required the main control unit is quickly informed through the direct connection 15b of the high priority input intelligent equipment as can be seen in the operating concept principle of the main control unit, figure 2.

If the high priority intelligent equipment does not require special attention, block 58, or the intelligent equipment is not of high priority, block 57, the process is directed to functional block 59. Through block 59, the intelligent equipment, regardless its type and priority, sends and receives data from the main control unit, using the communication protocol. Afterwards the process restarts from block 47.

After an intelligent equipment is connected to the automation system, first, it configures its internal modules as described in the operating principle presented in figure 3, then listens on the communication protocol for a general call from the main control unit.

When a general call is placed on the communication protocol the newly connected intelligent equipment responds to it. Then, a specific call is placed on the communication protocol by the master in order to identify newly connected intelligent equipment. Intelligent equipments responds to this specific call and waits to be auto integrated into the automation system and their functionalities and options configured by the operator. During the auto integration process, main control unit gathers and process all the available information from the recently connected intelligent equipments in order to be ready to use in short time.

If a high priority intelligent equipment has been identified by the main control unit when the intelligent equipment was auto integrated, the main control unit has to configure or reconfigure its pin direction so it will match with the type of intelligent equipment connected (input or output).

Based on information gathered during the auto integration process, the main control unit checks the automation system for incompatibilities. If there is not any incompatibility, the main control unit starts the configuration process. The configuration phase is done through the human-machine interface with respect to available configuration options and functionalities that were implemented inside the logic and distributed intelligence part of the concerned intelligent equipment.

The operator has to develop the control algorithm and to configure the functionality and available options of the connected intelligent equipments so that, the overall functionality of the automation system to suit the needs of the served process. This is done through the human-machine interface. The corresponding source code is automatically generated by the human-machine interface and programmed into the main control unit and the logic and distributed intelligence part of intelligent equipments specific memory zone, after confirmed by the operator. The control algorithm or the intelligent equipments configuration can be modified when the operator needs to.

After the main control unit and intelligent equipments are programmed they cooperate for achieving the overall functionality as developed by the operator and as presented in the diagram of their operating principle, figure 2 and figure 3.

During operation the main control unit is capable to quickly trigger specific procedures and actions on high priority output intelligent equipments side. Also high priority input intelligent equipments are able to quickly trigger specific procedures and actions on main control unit side. These actions are subject of how main control unit and intelligent equipments were configured and how the process which is conducted reacts.

Intelligent equipments can also be connected in cascade for achieving a desired functionality.

### Advantages

These days, the global economy is characterized by a continuous increase for personalized products with a reduced life cycle, high level of quality and low prices. In these conditions, the only option of small to medium enterprises from all industry sectors to survive on the market, is to adopt a dynamic attitude focused on customer. The enterprise has to be capable to quickly answer market's requests, modify its batch sizes, and provide a broad range of products with a high level of quality. Moreover an enterprise has to be competitive and sustainable. By its concept, the above presented invention is capable to overwhelm some of traditional automation systems disadvantages and provide advantages and some of the requirements needed by future automation systems.

The advantages of the presented invention are:
- Reduced ramp-up time for automating processes.
- Avoiding equipment damage by incompatibilities detection, preventive maintenance and effective information management.
- Great scalability, since a wide range and number of equipments can be connected.
- Reliable, stable and cost effective control architecture.
- The control unit runs on a real time operating system driven by tasks, interrupts and priorities to assure a fast response and smooth control of the automation process.
- Highly adaptive and real-time re-configurable architecture of main control unit and intelligent equipments.
- Reduced computational load for the main control unit since tasks are distributed to intelligent equipments.
- Human-machine interface with built-in automatic code generator for developed control algorithm of the served process and chosen equipment options and functionalities.
- The logic and distributed intelligence part of intelligent equipments are programmed through the communication protocol.
- Increased accuracy of values since electric signals are processed as close as possible to the physical parameter they measure.
- Data is sent digitally between intelligent equipments and main control unit resulting in removing the effects of electric noise and reducing the probability of data inconsistency.
- No need of highly trained personnel to define the process control algorithm and configure equipments since the architecture has a friendly graphic human-machine interface.
- High level of modularity regarding software packets and hardware designs allows the main control unit and intelligent equipments to be easy to upgrade and debug.
- The possibility of improvement and repair of the distributed intelligence and logic part of the equipments.
- The direction of the main control unit connections to the outside world is real-time re-configurable with respect to the type of high priority intelligent equipment connected to it.

## Claims

1. Intelligent automation system based on a distributed, reconfigurable and adaptive architecture that consists of a main control unit (1), intelligent output equipments (2) and (4), intelligent input equipments (3) and (5), a communication protocol (14) and a human-machine interface (10), **characterized that,** in order to adapt to any process and to provide an efficient and quick response to its continuous changing requirements, the main control unit (1) has the ability that by using software algorithms, to real time change the direction of its connection to external world with respect to the type of high priority intelligent equipments (2) and (3) connected to its pins, based on information stored inside the logic and distributed intelligence part (11) where all the intelligent equipments of the proposed automation system are endowed with and through output (6) and input (7) adaptors, which supplies with power the circuitry of logic and distributed intelligence part (11) of high priority intelligent equipments (2), (3), assign a priority to the intelligent equipment to which it was connected, connect to the communication lines of the communication protocol and intelligent equipments, isolate the electric capacitance between them, modify the voltage level in order to match the logic of intelligent equipments and main control unit.

2. Intelligent automation system based on a distributed, reconfigurable and adaptive architecture, accordingly to claim 1, **characterized by,** achieving a first symbiosis between the logic of the main control unit (1) and the logic and distributed intelligence part (11) of the intelligent equipments (2), (3), (4) and (5) that are part of the automation process through the communication protocol (14) and through direct connections (15a) and (15b) considering high priority output and input intelligent equipments (2) and (3), and a second symbiosis between the logic and distributed intelligence part (11) of the intelligent equipment embedded design and the equipment itself which contains all the physical circuitry that are required for equipment control.

3. Intelligent automation system based on a distributed, reconfigurable and adaptive architecture, accordingly to claim 1, **characterized by,** the ability of the main control unit (1) to real-time adapt, auto-integrate and program a memory zone of the logic and distributed intelligence part (11) of the connected intelligent equipment (2), (3), (4) and (5) with the source code generated by the human-machine interface (10), using the communication protocol (14), according with the configuration and functionalities selected by the operator during the equipment configuration phase using the human-machine interface (10).

4. Intelligent automation system based on a distributed, reconfigurable and adaptive architecture, accordingly to claim 1, **characterized that,** the main control unit (1) using the communication protocol (14), has the following roles:
• to identify newly connected intelligent equipments and to establish a connection with the embedded system of the concerned intelligent equipment. To obtain the required information stored inside the logic and distributed intelligence part (11) of the intelligent equipment ( operating parameters, control algorithms, available configuration options and functionalities, etc).
• to real-time configure the direction of the main control unit (1) connection to external world, to output (15a) or input (15b), to which a high priority intelligent equipment was connected in order to match the type of intelligent equipment.
• to check the available information of the newly connected intelligent equipments and compare it with already connected intelligent equipments in order to identify incompatibilities, prevent execution mistakes and deterioration of the output equipments by blocking command attempts of the output signals and power circuitry (12), of the concerned intelligent output equipments.
• to show the status and condition of the connected intelligent equipments.
• to reveal the available information, configuration options, functionalities and to provide the support required to build a control algorithm to the operator through the human-machine interface (10).
• to program the specific memory zone of the logic and distributed intelligence part (11), of the connected intelligent equipments with respect to the options chosen by the operator during the configuration process or on request when needed.
• to exchange information and process data with intelligent equipments and to trigger, software procedures and hardware actions related to main control unit or intelligent equipments requirements, through the communication protocol (14), or through direct connections (15a) and (15b), on the main control unit or on the intelligent equipment side.

5. Intelligent automation system based on a distributed, reconfigurable and adaptive architecture, accordingly to claim 1, **characterized that,** intelligent equipments (2), (3), (4) and (5) are built of a common part named logic and distributed intelligence (11), and on the one hand a specific part for output intelligent equipments (2) and (4) named output signals and power circuitry (12), and on the other hand a specific part for input intelligent equipments (3) and (5) named digital and analog signals circuitry (13), the common part includes:
• all the available information about the equipment to which the embedded system was assigned to form an intelligent equipment required for the configuration phase (technical characteristics, operating parameters, control algorithms, implemented functionalities, etc ).
• all the software algorithms and physical circuitry required to power up and assure proper functionality of the logic and distributed intelligence part (11). This is required for the command and control of the output signals and power circuitry (12) part of intelligent output equipments or to control, monitor, process and manage gathered data from digital and analog signals circuitry (13) part of intelligent input equipments.

6. Intelligent automation system based on a distributed, reconfigurable and adaptive architecture, accordingly to claim 1, **characterized that,** intelligent equipments (2), (3), (4) and (5) have the following role:
• to configure their functionality and act as selected by the operator with respect to the available implemented configuration options, functionalities and constraints.
• to respond and act according to the control algorithm and obtain the required functionality as expressed by the operator through the equipment and process configuration.
• to alert the main control unit (1) about unusual events and take individual decisions in order to avoid damaging output equipments, by ignoring the commands of the concerned output equipment.
• to keep a database with important information about equipment functionality ( e.g. operating hours, operating environment, maintenance due dates, electric parameters).
• to identify unusual equipment behavior based on data record and report to the main control unit.

7. Intelligent automation system based on a distributed, reconfigurable and adaptive architecture, accordingly to claim 1, **characterized that,** adaptors (6), (7) and (8) have the following role:
• to assign a priority to the intelligent equipment to which it was connected.
• to supply with power the logic and distributed intelligence part 11 of intelligent equipments 2, 3, 4 and 5 from the power lines 16, 17 and 18.
• to connect intelligent equipments to the communication network together with ensuring the technical requirements needed by the communication protocol to provide the desired level of functionality and performances.
and considering high priority equipments adapters (6) and (7), they have the following additional roles:
• to provide optical isolation for the electric signal between main control unit and high priority intelligent equipments.
• to modify the voltage level of output (15a) and input (15b) signals in order to match the logic voltages for the intelligent equipments and the main control unit.
• to help main control unit identify connected intelligent equipments.
• to help the integration processes of the newly connected intelligent equipments and the configuration of the main control unit pins direction to which intelligent equipments were connected.
• to quick trigger specific implemented software procedures and hardware actions on the main control unit or intelligent equipments side, using direct connections 15a or 15b.

8. Intelligent automation system based on a distributed, reconfigurable and adaptive architecture, accordingly to claim 1, **characterized that,** the human-machine interface (10) is an intuitive graphic software application that contains an automatic source code generator, and is responsible for building the source code out of the selected configuration and functionality options during the configuration phase by the operator and program the generated source code into a specific memory zone of the logic and distributed intelligence part (11) of intelligent equipments (2), (3), (4) and (5) and have the following role:
• to established a connection with continuous data exchange between the intelligent equipments (2), (3), (4) and (5) of the served process and the operator.
• to notify the operator about main control unit (1) or intelligent equipments (2), (3), (4) and (5) independent decisions and actions.
• to be used as a development environment for the control algorithm of the served process and configuration environment for intelligent equipments (2), (3), (4) and (5).
• to generate the required source code for the automation system control and for intelligent equipments (2), (3), (4) and (5).

9. Intelligent automation system based on a distributed, reconfigurable and adaptive architecture, accordingly to claim 1, **characterized that,** after connecting a power supply (19) or under the operator action (20), inside main control unit (1) the following phases are:
• main control unit 1 configuration phase.
• intelligent equipment configuration phase.
• main control unit 1 operation and control phase.

10. Intelligent automation system based on a distributed, reconfigurable and adaptive architecture, accordingly to claims 1 and 9, **characterized that,** during the main control unit (1) configuration phase, the internal modules configuration are done through block (21) by a series of predefined procedures and actions, then the operation and control phase starts through block (22) by placing a general call on the communication protocol (14) in order to identify if new intelligent equipments (2), (3), (4) and (5) are connected, then test block (23), checks if a new intelligent equipment was connected and drives the process to the corresponding branch, afterwards regardless block (23) results, main control unit (1) uses test block (24), to run a compatibility check between existing intelligent equipments and the newly connected one, and drives the process to the corresponding branch according to the result of the test, if an incompatibility has been identified, the process is directed towards block (25), where specific algorithms are run for managing incompatibilities cases, then block (26) informs the operator about the identified situations and all its options as identified by block (25), afterwards the process goes back to block (23), until the operator will not take a decision or action regarding the identified incompatibility, the main control unit will avoid the control of concerned intelligent equipment and related intelligent equipments.

11. Intelligent automation system based on a distributed, reconfigurable and adaptive architecture, accordingly to claims 1 and 9, **characterized that,** the intelligent equipment configuration phase starts when block (23) identifies that at least one equipment is new and there is not any incompatibility denoted by block (24) then, the process is directed to block (27) which goal is to connect to the logic and distributed intelligence part of the newly intelligent equipment, to identify and auto integrate it, after the equipment is identified and integrated, the process is directed to block (28), that is used, to find out intelligent equipment available functionalities and configuration options which are implemented in a memory zone of the logic and distributed intelligence part of the connected intelligent equipment, then the process reaches block (29) that sends the identified functionalities and configuration options of the newly connected intelligent equipment to the human-machine interface then, block (30), identifies what options have been chosen by the operator, with respect to available functionalities and configuration options, afterwards through block (31), the main control unit (1) periodically checks if the operator ended the configuration process, if not the process goes back to block (30).

12. Intelligent automation system based on a distributed, reconfigurable and adaptive architecture, accordingly to claims 1 and 9, **characterized that,** when the operator ended the configuration of the intelligent equipment, the source code is automatically generated by the human-machine interface (10), according to the intelligent equipment configuration phase and represented through block (32), afterwards block (33) is used to represent the program operation of a specific memory zone of the logic and distributed intelligence part (11) with the generated source code, so that the newly connected intelligent equipment to act as specified by the operator in the configuration process, after the intelligent equipment configuration phase ends, the process goes back to test block (23), if there is not any new intelligent equipment connected and there is not an incompatibility denoted by block (24) then the process is directed to functional block (34), which has to manage and process data that have been received from the connected intelligent equipments or that have to be sent to the connected intelligent equipments.

13. Intelligent automation system based on a distributed, reconfigurable and adaptive architecture, accordingly to claims 1 and 9, **characterized that,** by block (35) main control unit (1) checks the processed data, from block (34), in order to identify intelligent equipments that requires special attentions and if an intelligent equipment requires special attention, the process is directed towards functional block (36), through the corresponding branch of block (35), then specific software routines and hardware actions are triggered by block (36) for the concerned intelligent equipments through the communication protocol (14) and through the direct connection (15a), in case of high priority output intelligent equipments, the effects of this actions and procedures are reflected in the operating principle of the intelligent equipments and their functionality, as in figure 3, then the process is directed back to block (34), and if there is not any intelligent equipment that requires special attention the process is directed through the corresponding branch of block (35) to block (37), which contains specific control algorithms required to drive the served process as specified by the operator, furthermore block (38) checks if a request for intelligent equipment re-configuration has been placed by the operator, if it is the case for such a request, the process goes to block (28) and the specific equipment configuration phase starts again for the concerned intelligent equipment. If there is not any request the process starts over from block (23).

14. Intelligent automation system based on a distributed, reconfigurable and adaptive architecture, accordingly to claims 1 and 9, **characterized that,** block (39) listens and identifies signals triggered by high priority input intelligent equipment, based on their operating principle as presented in figure 3, then, if such a signal is identified, functional block (40) starts specific procedures and actions in order to quickly solve the issues generated by high priority input intelligent equipments (3), if a signal from a high priority input equipment is sent, the process immediately jumps to block (39) regardless the block that was being processed, block (40) solves the high priority input intelligent equipment request, then the process goes back to the block that was ongoing when the high priority signal was received or the process start over from block 23.

15. Intelligent automation system based on a distributed, reconfigurable and adaptive architecture, accordingly to claims 1 and 9, **characterized that,** after connecting a power supply (41) or under the operator action (42), inside intelligent equipments (2), (3), (4) and (5) the following phases are:
• intelligent equipments (2), (3), (4) and (5) internal modules configuration phase.
• intelligent equipment (2), (3), (4) and (5) configuration phase.
• intelligent equipment (2), (3), (4) and (5) operation and control phase.

16. Intelligent automation system based on a distributed, reconfigurable and adaptive architecture, accordingly to claims 1, 9 and 15, **characterized that,** during the internal modules configuration phase, intelligent equipments (2), (3), (4) and (5), are running a set of predefined procedures and actions through block (43), which configures by software means the internal modules of the intelligent equipments (2), (3), (4) and (5) in order to achieve the basic functionality required to operate properly, then the process is directed towards block (44) which listens on the communication protocol for a general call, which if received the process is directed to block (45), where an acknowledgment is placed back on the communication protocol, in order for the main control unit (1) to know that a new intelligent equipments has been connected, or if the equipment it is not new the process is directed to block (46) where the intelligent equipment (2), (3), (4) and (5) listens on the communication protocol until is called by the main control unit, when this happens the process is directed to block (47) which checks if the equipment is configured or not and the process is driven to the corresponding process branch, if the intelligent equipment is not configured, the configuration phase of the intelligent equipment options and functionalities start with block (48) which, responds to the main control unit requirements and delivers all the available information about the intelligent equipment together with implemented configuration options and functionalities required for configuration process, then the intelligent equipment checks through block (49), if the configuration process ended, if not, the process will check again, until, the configuration process ends and the process is directed toward block (50) which represents the programming process of the source code generated by the human-machine interface(10) according with operator selections into a specific memory zone of the logic and distributed intelligence part (11) of the intelligent equipment, after the intelligent equipment is programmed the configuration phase of the intelligent equipment options and functionalities ends.

17. Intelligent automation system based on a distributed, reconfigurable and adaptive architecture, accordingly to claims 1, 9 and 15, **characterized that,** by block (51) that runs a compatibility check between other existing intelligent equipments to which this intelligent equipment was assigned or to which other intelligent equipments were assigned, if an incompatibility has been identified by block (51) and through the corresponding branch the process is directed to block (52), which ignores all control actions of the concerned intelligent equipment, then the intelligent equipment lets the main control unit (1) know about this particular situation through bloc (53) and the process goes back to block 51 to check if the incompatibility is still present, if there is no incompatibility or the existing ones have been fixed, the process is directed to block (54), which checks if a special situation or procedure has been triggered by the main control unit through the direct connection or through the communication protocol, if it is the case the process is directed to block (55) which triggers specific handling software procedures and hardware actions according with the requirements of the identified special situation, if it is the case for a signal from the main control unit (1) sent to a high priority output equipments through the direct connection (15a) the process immediately jumps to block (54) regardless the block that was being processed, block (55) solves the main control unit (1) requests, then process goes back to the block that was ongoing when the high priority signal was received, from block (55) the process goes back to block (54) to check for other special situation, if none process moves to block (56), that gathers all the algorithms used by the intelligent equipment in order to respond to the requirements of the main control unit or of the served process, as configured by the operator, afterwards the process is directed to block (57) which checks if it is a high priority input intelligent equipment, if it is the case the process is directed to block (58) that checks if the concerned equipment requires special attention, based on information processed by block (56) and if it is the case, main control unit (1) is quickly informed through the direct connection (15b) of the input intelligent equipment, these actions are reflected in the operating principle of the intelligent equipments and their functionality, as in figure 2, then the process is directed back to block (57), if the high priority intelligent equipment does not require special attention, block (58), or the intelligent equipment is not of high priority, block (57), the process is directed to functional block (59) which regardless intelligent equipment type and priority, sends and receives data from the main control unit, using the communication protocol, the intelligent equipment can also let know the main control unit that it requires attention, but it will not be received immediately as in case of high priority output intelligent equipments (2), afterwards the process restarts from block (47).
